# EUROPEAN PATENT APPLICATION

(11) **EP 3 668 233 A1**
(43) Date of publication of application: **17.06.2020**
(21) Application number: 17921326.9
(22) Date of filing: 09.08.2017
(51) Int. Cl.: H04W 72/12, H04J 3/00, H04W 72/04

(54) **USER TERMINAL AND RADIO COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); GUO, Shaozhen, Beijing 100190 (CN); WANG, Lihui, Beijing 100190 (CN); HOU, Xiaolin, Beijing 100190 (CN)
(74) Representative: Hoffmann Eitle
(86) International application number: PCT/JP2017/028982
(87) International publication number: WO 2019/030870

(57) **Abstract**

To adequately control, even in a case that an Unknown resource is included within a time/frequency resource in which data channel is scheduled, transmission and/or reception of the data channel. A user terminal according to the present invention includes a receiving section that receives first downlink control information (DCI) indicating a Unknown resource in which transmission and/or reception the user terminal should not assume, and a control section that controls, in a case that at least a part of a time and/frequency resource in which data channel is scheduled according to second downlink control information (DCI) collides with the Unknown resource, reception and/or transmission of the data channel in the time and/or frequency resource.

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency, and so on (see non-patent literature 1). Moreover, for the purpose of further wider bandwidth and higher speed than LTE, successor systems of LTE (referred to as, for example, LTE-A (LTE-Advanced), FRA (Future Radio Access), 4G, 5G, 5G +(plus), NR (New RAT), LTE Rel. 14, Rel. 15 or later versions) are also under study.

In the existing LTE systems (for example, LTE Rel. 8 to Rel. 13), a subframe of 1 ms is used as a time unit for scheduling a data channel (including a DL data channel (for example, PDSCH (Physical Downlink Shared Channel)) and/or a UL data channel (for example, PUSCH (Physical Uplink Shared Channel))), and also simply referred to as data or common channel and the like). The subframe is also referred to as a transmission time interval (TTI) and the like.

In the existing LTE systems, also supported are time division duplex (TDD) and/or frequency division duplex (FDD). In the TDD, a transmission direction of each subframe is semi-statically controlled based on a UL/DL configuration that defines a transmission direction (downlink (DL) and/or uplink (UL)) of each subframe in a radio frame.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), a study has been underway to make it possible to indicate a certain time and/or frequency resource (time/frequency resource) within a time unit in which data channel is scheduled (for example, one or more slots, one or more mini-slots, and one or more symbols) during which certain time and/or frequency resource a user terminal should not assume anything (for example, control and/or operation for transmission and/or reception).

The certain time/frequency resource may be provided for future extendability (forward compatibility), for example. The certain time/frequency resource is also referred to as an unknown resource, a reserved resource, a blank resource, an unused resource, or the like.

However, in a case that an Unknown resource is included within a time unit in which data channel is scheduled, transmission and/or reception of the data channel may not be adequately controlled.

The present invention has been made in light of the foregoing, and an object of the present invention is provide a user terminal and a radio communication method capable of adequately controlling transmission and/or reception of data channel even in a case that an Unknown resource is included within a time unit in which the data channel is scheduled. Solution to Problem

A first aspect of a user terminal according to the present invention includes: a transmitting and/or receiving section that receives first downlink control information (DCI) indicating a first time and/or frequency resource in which transmission and/or reception the user terminal should not assume; and a control section that controls, in a case that at least a part of a second time and/frequency resource in which data channel is scheduled according to second downlink control information (DCI) collides with the first time and/or frequency resource, reception and/or transmission of the data channel in the second time and/or frequency resource.

### Advantageous Effects of Invention

According to the present invention, even in a case that an Unknown resource is included within a time/frequency resource in which data channel is scheduled, transmission and/or reception of the data channel can be adequately controlled.

### Brief Description of Drawings

FIGS. 1A and 1B are diagrams to show examples of collision control through scheduling according to a first aspect;
FIGS. 2A and 2B are diagrams to show examples of override control for an Unknown resource according to the first aspect;
FIGS. 3A and 3B are diagrams to show examples of override control based on the latest indication information according to a second aspect;
FIGS. 4A and 4B are diagrams to show examples of the override control based on the latest indication information according to the second aspect;
FIGS. 5A and 5B are diagrams to show examples of override control for an Unknown resource according to the second aspect;
FIGS. 6A and 6B are diagrams to show examples of the override control for the Unknown resource according to the second aspect;
FIG. 7 is a diagram to show an example of a schematic structure of a radio communication system according to the present embodiment;
FIG. 8 is a diagram to show an example of an overall structure of a radio base station according to the present embodiment;
FIG. 9 is a diagram to show an example of a functional structure of the radio base station according to the present embodiment;
FIG. 10 is a diagram to show an example of an overall structure of a user terminal according to the present embodiment;
FIG. 11 is a diagram to show an example of a functional structure of the user terminal according to the present embodiment; and
FIG. 12 is a diagram to show an example of a hardware structure of the radio base station and the user terminal according to the present embodiment.

### Description of Embodiments

For future radio communication systems (for example, NR), a study has been underway to make it possible to indicate a certain time and/or frequency resource (time/frequency resource) within a time unit as a scheduling unit for data channel (for example, at least one of one or more slots, one or more mini-slots, and one or more symbols) during which certain time and/or frequency resource a user terminal should not assume anything (for example, control and/or operation for transmission and/or reception).

The certain time/frequency resource is provided for future extendability (forward compatibility), for example. The certain time/frequency resource is also referred to as an unknown resource, a reserved resource, a blank resource, an unused resource, a first time/frequency resource, or the like.

The time resource reserved (configured) as an Unknown resource may be, for example, at least one of one or more symbols, one or more slots, and one or more mini-symbols. The frequency resource reserved as an UnKnown resource is at least a part of a frequency band configured for the user terminal (for example, a carrier (also referred to as a component carrier (CC), a system band, or the like) or a bandwidth part (BWP) configured for at least a part of the carrier. For example, the frequency resource may be a whole of the carrier (or the BWP), or a subset of PRBs constituting the carrier (or the BWP).

Such an Unknown resource may be indicated by information related to format of a time unit in which the data channel is scheduled (for example, at least one of one or more slots, one or more mini-slots, and one or more symbols) (format related information, hereinafter, also referred to as slot format related information (SFI) or the like).

The SFI may indicate, as the format of the above time unit, at least one of the above time/frequency resource reserved as an Unknown resource, the number of symbols within the above time unit, and a symbol for DL (DL symbol) and/or a symbol for UL (UL symbol) within the above time unit. One or more candidates of the format indicated by the SFI may be defined in advance by a specification, or configured through higher layer signaling.

The SFI may be included in downlink control information (DCI) common in a group including one or more user terminals (a group-common DCI or a first DCI and the like). Alternatively, the SFI may be included in other control information notified through physical layer signaling, or in control information notified through higher layer signaling.

On the other hand, the data channel for the user terminal (for example, PDSCH and/or PUSCH) is scheduled by DCI specific to the user terminal (also referred to as UE-specific DCI or a second DCI, or the like, which is, for example, a DL assignment and/or a UL grant). The UE-specific DCI may indicate a symbol in which the data channel is scheduled within the above time unit.

The user terminal is configured with one or more candidate regions to which a DL control channel (for example, PDCCH (Physical Downlink Control Channel)) is allocated in a frequency band configured for the user terminal (for example, a carrier, a component carrier (CC), a system band, or a band part (BWP (Bandwidth Part) in the carrier. The candidate region is also referred to as a control resource set (CORESET), a control subband, a search space set, a search space resource set, a control region, a control subband, a NR-PDCCH region, or the like) .

The user terminal monitors (blind decodes) one or more search spaces (for example, a common search space (CSS) and/or a user terminal-specific search space (USS (UE-specific Search Space))) in at least one CORESET to detect the DCI including the SFI and the UE-specific DCI described above.

However, in a case that an Unknown resource indicated by the SFI is included within the time unit in which the data channel is scheduled (for example, at least one of one or more slots, one or more mini-slots, and one or more symbols), the user terminal may not adequately control transmission and/or reception of the data channel in the time unit.

For this reason, the inventors of the present invention come up with the idea of scheduling such that the Unknown resource within the time unit described above (the first time/frequency resource) does not collide with a time/frequency resource for the data channel (a second time/frequency resource). Alternatively, the inventors of the present invention come up with the idea of permitting the collision between the Unknown resource within the time unit described above (the first time/frequency resource) and the time/frequency resource for the data channel (the second time/frequency resource), while the transmission and/or reception of the data channel can be adequately controlled (override control for the unknown resource or override control based on the latest indication information).

Hereinafter, an embodiment according to the present invention will be described with reference to the drawings. In the following description, PDSCH and PUSCH are described as the DL data channel and the UL data channel, respectively, without limitation.

### (First Aspect)

In a first aspect, a case will be described that SFI indicating an Unknown resource (DCI including the SFI), and DCI used for PDSCH scheduling (DL assignment) and/or DCI used for PUSCH scheduling (UL grant) are detected in the same slot.

### <Contention Control through Scheduling>

The user terminal may assume, in the case that the DCI including the SFI, and the DL assignment and/or the UL grant (DL assignment/UL grant) are detected in the same slot, that the PDSCH and/or the PUSCH (PDSCH/PUSCH) are not scheduled in the Unknown resource indicated by the SFI.

A radio base station (for example, gNB (gNodeB)) does not schedule the PDSCH/PUSCH in the time/frequency resource (for example, symbol) reserved as an Unknown resource. Such scheduling by the radio base station can avoid collision between the symbol in which the PDSCH/PUSCH is scheduled and the Unknown resource indicated by the SFI.

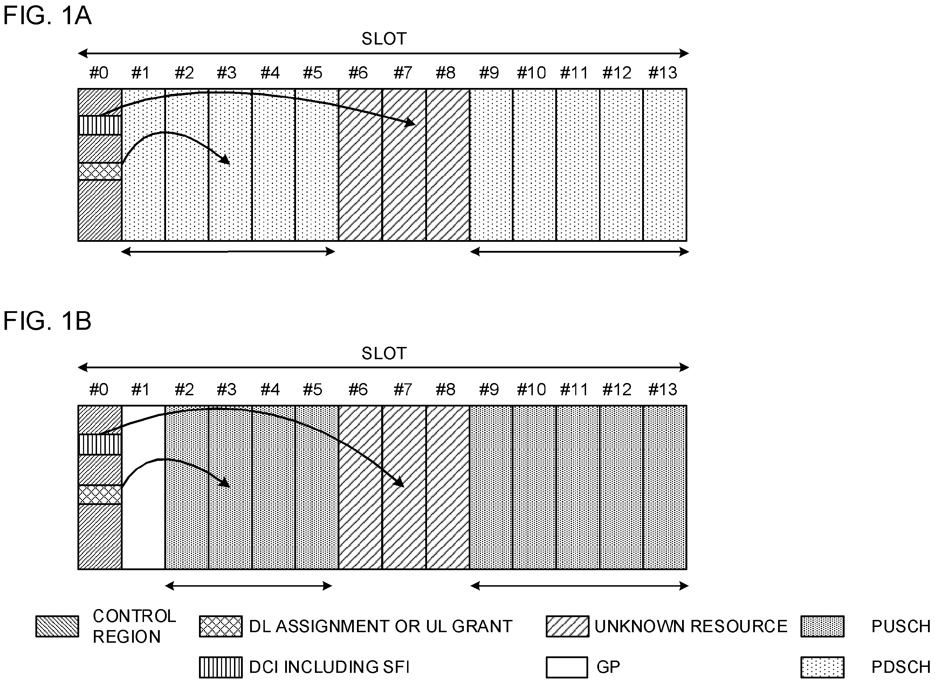

FIGS. 1A and 1B are diagrams to show examples of collision control through scheduling according to the first aspect. Note that in FIGS. 1A and 1B, one slot is constituted by 14 symbols, but the number of symbols in the slot, and positions and/or the numbers of DL symbols, UL symbols, and GP symbols in the slot are not limited to those shown in the drawings.

For example, in FIGS. 1A and 1B, the user terminal may monitor the search space in the CORESET (for example, common search space) to detect the DCI including the SFI. The user terminal may monitor the search space in the CORESET (for example, UE-specific search space) to detect the DL assignment/UL grant in the same slot as the DCI including the SFI.

In FIGS. 1A and 1B, the radio base station transmits the SFI indicating that symbols #6 to #8 are reserved as the Unknown resource. In FIG. 1A, the radio base station schedules the PDSCH in symbols #1 to #5 and #9 to 13 other than the Unknown resource to transmit a DL assignment. Similarly, in FIG. 1B, the radio base station schedules the PUSCH in symbols #2 to #5 and #9 to 13 to transmit a UL assignment. Note that the positions and/or the numbers of Unknown resources in FIGS. 1A and 1B are merely examples, and are not limited thereto.

In FIG. 1A, the user terminal receives the PDSCH based on scheduling information in the detected DL assignment (for example, PDSCH allocation information in symbols #1 to #5 and #9 to #13). In FIG. 1B, the user terminal receives the PUSCH, based on scheduling information in the detected UL grant (for example, PUSCH allocation information in symbols #2 to #5 and #9 to #13).

As described above, in the collision control through scheduling, the radio base station does not schedule the PDSCH/PUSCH in the time/frequency resource reserved as the Unknown resource. Accordingly, even in a case that the user terminal detects the SFI and the DL assignment/UL grant in the same slot, the user terminal can adequately control PDSCH reception and/or PUSCH transmission through control by the radio base station side.

### <Override Control for Unknown Resource>

Alternatively, the radio base station may schedule the PDSCH/PUSCH regardless of whether or not the time/frequency resource is reserved as an Unknown resource. In this case, the user terminal should not perform the PDSCH reception based on the DL assignment and/or the PUSCH transmission based on the UL grant in the Unknown resource indicated by the SFI.

Specifically, in a case that the time/frequency resource is indicated by the SFI as the Unknown resource even the PDSCH/PUSCH is scheduled in the time/frequency resource by way of the DL assignment/UL grant, the user terminal does not perform the PDSCH reception and/or PUSCH transmission in the Unknown resource.

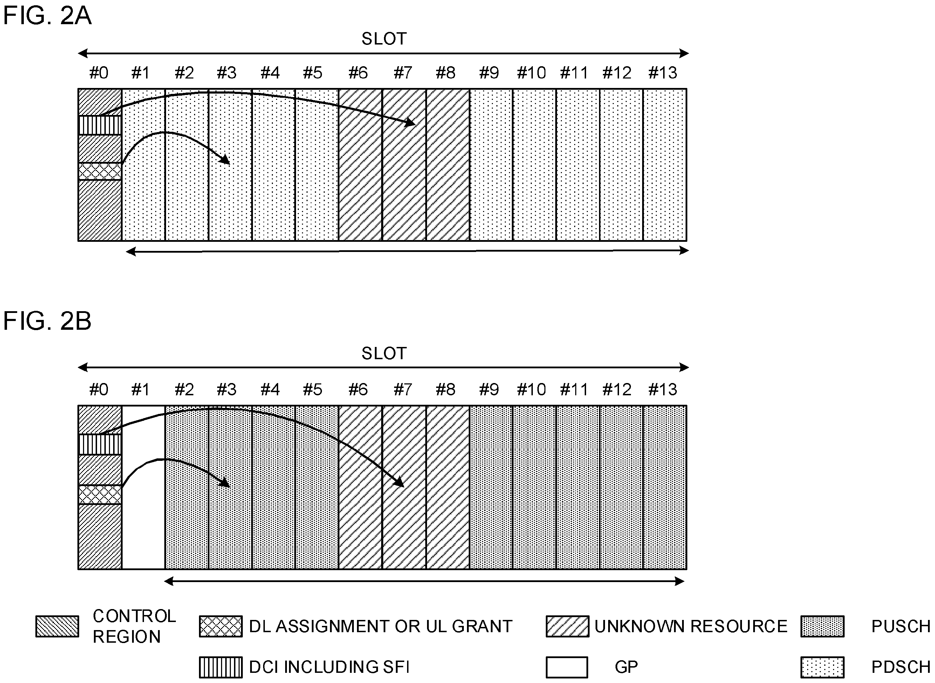

FIGS. 2A and 2B are diagrams to show examples of override control for an Unknown resource according to the first aspect. Note that in FIGS. 2A and 2B, differences from FIGS. 1A and 1B are mainly described. In FIGS. 2A and 2B, there is a difference from FIGS. 1A and 1B in that at least a part of the time/frequency resource in which the PDSCH/PUSCH is scheduled collides with the Unknown resource.

For example, in FIG. 2A, the radio base station schedules the PDSCH in symbols #1 to #13 which include the Unknown resource to transmit a DL assignment. Similarly, in FIG. 2B, the radio base station schedules the PUSCH in symbols #2 to 13 to transmit a UL assignment.

In FIG. 2A, the user terminal should not receive the PDSCH, based on the scheduling information in the DL assignment (for example, PDSCH allocation information for symbols #1 to #13) in the time/frequency resource reserved as the Unknown resource (for example, symbols #6 to #8). The user terminal may receive the PDSCH, based on the scheduling information in the time/frequency resource other than the Unknown resource (for example, symbols #1 to #5 and #9 to #13).

Similarly, in FIG. 2B, the user terminal should not transmit the PUSCH, based on the scheduling information in the UL grant (for example, PUSCH allocation information for symbols #2 to #13) in the time/frequency resource reserved as an Unknown resource (for example, symbols #6 to #8). The user terminal may transmit the PUSCH in the time/frequency resource other than the Unknown resource (for example, symbols #2 to #5 and 9 to #13), based on the scheduling information.

Note that in a case that a reference signal (for example, a demodulation reference signal (DMRS) for the PDSCH/PUSCH and/or a reference signal for measuring channel state information (CSI)(CSI-RS)) are allocated to the time/frequency resource reserved as the Unknown resource (for example, symbols #6 to #8), the user terminal may not estimate and/or measure the channel by use of the reference signal.

For the time/frequency resource reserved as an Unknown resource, the PDSCH/PUSCH may be punctured or rate-matched.

### <<Case of Puncturing>>

The user terminal may determine a size of DL data and/or UL data (transport block) (a size of transport block (TB) (TBS (Transport Block Size))) transmitted on the PDSCH/PUSCH regardless of the Unknown resource in the time/frequency resource in which the PDSCH/PUSCH is scheduled.

The user terminal may determine the number of code blocks (CBs) constituting the TB, based on the TBS. The TB is segmented into one or more CBs, and the respective CBs are coded. The one or more CBs may be mapped to the time/frequency resource scheduled by way of the DL assignment/UL grant as if there is no Unknown resource in the slot.

In a case that at least a part of the time/frequency resource scheduled by way of the DL assignment overlaps the Unknown resource, the user terminal does not need to decode one or more CBs mapped to the time/frequency resource (for example, symbols #6 to #8 in FIG. 2A) overlapping the Unknown resource, but needs to decode one or more CBs mapped to the time/frequency resource (for example, symbols #1 to #5 and #9 to #13 in FIG. 2A) not overlapping the Unknown resource.

In a case of puncturing, the DL data and/or the UL data is decoded on a reception side (the user terminal in the DL, and the radio base station in the UL) in consideration of the Unknown resource. Therefore, the DL data and/or the UL data can be mapped to the above scheduled time/frequency resource on a transmission side (the radio base station in the DL, and the user terminal in the UL) regardless of the Unknown resource, and thus, a processing load on the transmission side can be reduced.

### <<Case of Rate Matching>>

Alternatively, the user terminal may determine the size of the DL data and/or the UL data (TB) (TBS) transmitted on the PDSCH/PUSCH in consideration of the Unknown resource in the time/frequency resource in which the PDSCH/PUSCH is scheduled.

The user terminal may determine the number of CBs constituting the TB based on the TBS. The TB is segmented into one or more CBs, and the respective CBs are coded. The one or more CBs may be mapped to the time/frequency resource scheduled in the PDSCH/PUSCH so as not to be mapped to the Unknown resource (that is, may be mapped in the scheduled time/frequency resource other than the Unknown resource).

In a case that at least a part of the time/frequency resource scheduled by way of the DL assignment overlaps the Unknown resource, the user terminal decodes one or more CBs as if there is no Unknown resource in the time/frequency resource (for example, symbols #1 to #13 in FIG. 2A).

In a case of rate matching, the DL data and/or UL data is coded and/or mapped on the transmission side (the radio base station in the DL, and the user terminal in the UL) in consideration of the Unknown resource. Therefore, the DL data and/or the UL data can be decoded on the reception side (the user terminal in the DL, and the radio base station in the UL) regardless of the Unknown resource, and thus, a processing load on the reception side can be reduced.

As described above, performed in the override control for the Unknown resource are a receiving process in consideration of the Unknown resource by puncturing or a transmitting process in consideration of the Unknown resource by rate matching described above. Accordingly, even in the case that the user terminal detects the SFI and the DL assignment/UL grant in the same slot, the user terminal can adequately control PDSCH reception and/or PUSCH transmission through control by the radio base station side or the user terminal side.

According to the first aspect, even in the case that SFI indicating an Unknown resource (DCI including the SFI) and a DL assignment/UL grant are detected in the same slot, the user terminal can adequately control the PDSCH reception and/or the PUSCH transmission.

### (Second Aspect)

In a second aspect, a case will be described that SFI indicating an Unknown resource (DCI including the SFI) and a DL assignment/UL grant are detected in slots different from each other.

In the second aspect, the radio base station may schedule the PDSCH/PUSCH regardless of whether or not the time/frequency resource is reserved as an Unknown resource. In a case that the DL assignment/UL grant is detected in a slot before a slot in which the SFI is detected, the user terminal dose not perform the PDSCH reception based on the DL assignment and/or the PUSCH transmission based on the UL grant in a time and/or frequency resource colliding with the Unknown resource.

On the other hand, in a case that the DL assignment/UL grant is detected in a slot after a slot in which the SFI is detected, a problem is how to control, in the user terminal, the PDSCH reception and/or the PUSCH transmission in a time and/or frequency resource colliding with the Unknown resource. In this case, the indication information detected last may be prioritized, or the Unknown resource may be prioritized.

### <Override Control Based on Latest Indication Information>

The user terminal, in a case that SFI indicating an Unknown resource and a DL assignment/UL grant are detected in slots different from each other, may make the indication information detected last (for example, DL assignment/UL grant (or SFI)) override the indication information detected previously (for example, SFI (or DL assignment/UL grant)).

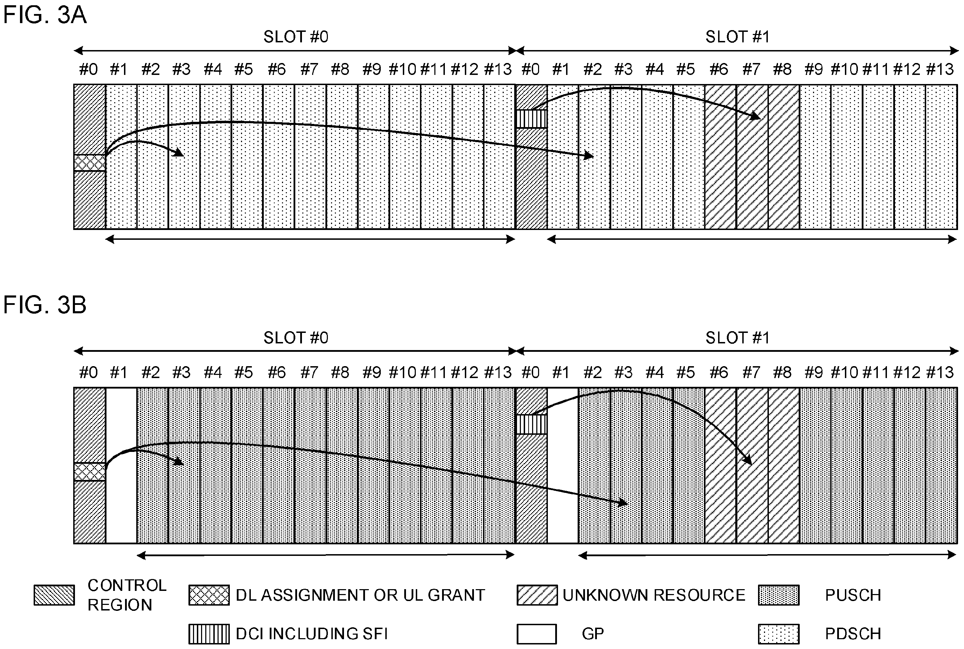

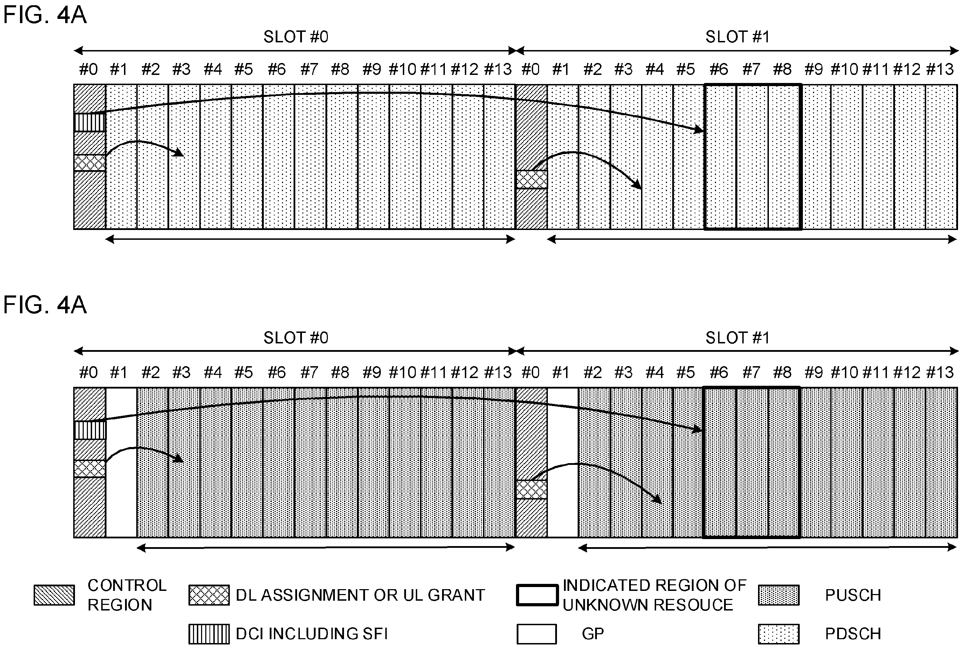

With reference to FIGS. 3A and 3B, and FIGS. 4A and 4B, a detail description is given of override control based on the latest indication information in the case that SFI indicating an Unknown resource and a DL assignment/UL grant are detected in slots different from each other. Note that FIGS. 3A and 3B, and FIGS. 4A and 4B mainly illustrate differences from FIGS. 2A and 2B. FIGS. 3A and 3B, and FIGS. 4A and 4B are different from FIGS. 2A and 2B in that the SFI indicating the Unknown resource and the DL assignment/UL grant are detected in the slots different from each other.

### <<Case that DL Assignment/UL Grant is Detected in Slot before a slot in which SFI is detected>>

FIGS. 3A and 3B are diagrams to show examples of override control based on the latest indication information according to the second aspect. In FIGS. 3A and 3B, SFI indicating an Unknown resource is detected in a slot after a slot in which the DL assignment/UL grant is detected.

For example, in FIG. 3A, the PDSCH is scheduled in one or more slots by way of a single DL assignment. For example, in FIG. 3A, the radio base station transmits, in slot #0, a DL assignment indicating that symbols #1 to #13 in slot #0 and symbols #1 to #13 in slot #1 are assigned to the PDSCH. The user terminal monitors a CORESET in slot #0 to detect the DL assignment.

In FIG. 3A, the user terminal detects the DCI including the SFI in slot #1 after slot #0 in which the DL assignment is detected. For example, in FIG. 3A, SFI is detected in slot #1, the SFI indicating that symbols #6 to #8 in slot #1 are reserved as an Unknown resource. The user terminal does not perform the PDSCH reception based on the DL assignment detected in slot #0 in the Unknown resource indicated by the SFI detected in slot #1.

Similarly, in FIG. 3B, the PUSCH is scheduled in one or more slots by way of a single UL grant. For example, in FIG. 3B, the radio base station transmits, in slot #0, a UL grant indicating that symbols #2 to #13 in slot #0 and symbols #2 to #13 in slot #1 are assigned to the PUSCH. The user terminal monitors a CORESET in slot #0 to detect the UL grant.

In FIG. 3B, the user terminal detects the DCI including the SFI in slot #1 after slot #0 in which the UL grant is detected. For example, in FIG. 3B, SFI is detected in slot #1, the SFI indicating that symbols #6 to #8 in slot #1 are reserved as an Unknown resource. The user terminal does not perform the PUSCH transmission based on the UL grant detected in slot #0 in the Unknown resource indicated by the SFI detected in slot #1.

Note that in FIGS. 3A and 3B, the PDSCH/PUSCH are scheduled in slot #0, and thereafter, the Unknown resource is indicated in slot #1 by the SFI. In this manner, in a case that the indication of the Unknown resource by the SFI is after a certain timing (for example, a PDSCH/PUSCH scheduling timing), the Unknown resource cannot be taken into account on the transmission side (the radio base station in the DL, and the user terminal in the UL). For this reason, the DL data and/or the UL data may be decoded through the puncturing described above on the reception side (the user terminal in the DL, and the radio base station in the UL) in consideration of the Unknown resource.

In FIGS. 3A and 3B, a feedback timing of transmission confirmation information (HARQ-ACK) for PDSCH/PUSCH may be determined regardless of whether or not the time/frequency resource scheduled in the PDSCH/PUSCH includes an Unknown resource.

### <<Case that DL Assignment/UL Grant is Detected in Slot after a slot in which SFI is detected >>

FIGS. 4A and 4B are diagrams to show other examples of override control based on the latest indication information according to the second aspect. In FIGS. 4A and 4B, the DL assignment/UL grant is detected in a slot after a slot in which the SFI indicating the Unknown resource is detected.

For example, in FIG. 4A, the user terminal monitors a CORESET in slot #0 to detect a DL assignment in slot #0 for scheduling the PDSCH, and DCI including SFI indicating an Unknown resource reserved in slot #1.

In FIG. 4A, the user terminal also monitors a CORESET in slot #1 after slot #0 to detect a DL assignment in slot #1 for scheduling the PDSCH. For example, in FIG. 4A, the PDSCH is scheduled, by way of the DL assignment, in symbols #1 to #13 including the Unknown resource indicated by the SFI detected in previous slot #0.

In FIG. 4A, the user terminal makes the DL assignment detected in later slot #1 override the SFI detected in previous slot #0. Specifically, the user terminal performs, in slot #1, the PDSCH reception based on the DL assignment detected in slot #1, in symbols #1 to #13 including symbols #6 to #8 indicated as an Unknown resource by the SFI.

Similarly, in FIG. 4B, the PUSCH is scheduled in a slot in which the UL grant is detected, by way of the UL grant. In FIG. 4B, a CORESET in slot #0 is monitored to detect a UL grant in slot #0 for scheduling the PUSCH, and DCI including SFI indicating an Unknown resource reserved in slot #1.

In FIG. 4B, the user terminal also monitors a CORESET in slot #1 after slot #0 to detect a UL grant in slot #1 for scheduling the PUSCH. For example, in FIG. 4B, the PUSCH is scheduled, by way of the UL grant, in symbols #1 to #13 including the Unknown resource indicated by the SFI detected in previous slot #0.

In FIG. 4B, the user terminal makes the UL grant detected in later slot #1 override the SFI detected in previous slot #0. Specifically, the user terminal performs, in slot #1, the PUSCH transmission based on the UL grant detected in slot #1, in symbols #2 to #13 including symbols #6 to #8 indicated as an Unknown resource by the SFI.

As described above, in the override control based on the latest indication information, even after indicating an Unknown resource by the SFI, the PDSCH reception and/or the PUSCH transmission can be performed in the Unknown resource by scheduling for a time/frequency resource including the Unknown resource. Therefore, utilization efficiency of radio resources can be improved.

### <Override Control for Unknown Resource>

Alternatively, regardless of whether the DL assignment/UL grant is detected in any slot before or after the SFI indicating the Unknown resource, the user terminal may make the SFI indicating the Unknown resource override the DL assignment/UL grant.

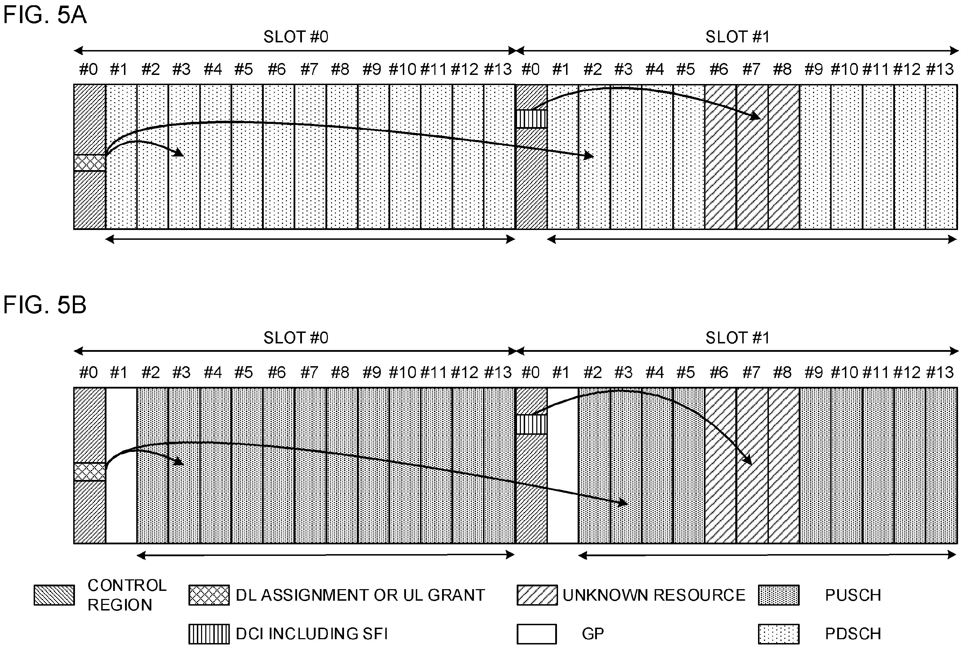

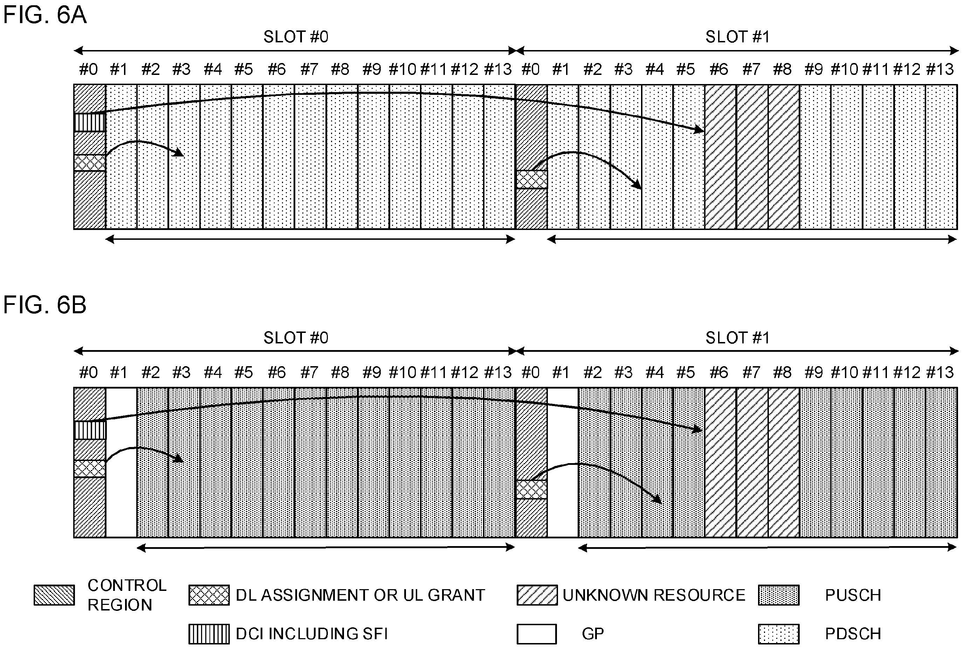

With reference to FIGS. 5A and 5B, and FIGS. 6A and 6B, a detail description is given of override control for the Unknown resource in the case that SFI indicating an Unknown resource and a DL assignment/UL grant are detected in slots different from each other. Note that FIGS. 5A and 5B, and FIGS. 6A and 6B mainly illustrate differences from FIGS. 3A and 3B, and FIGS. 4A and 4B, respectively. FIGS. 5A and 5B, and FIGS. 6A and 6B are different from FIGS. 3A and 3B, and FIGS. 4A and 4B in that the Unknown resource is prioritized regardless of whether the DL assignment/UL grant is detected in any slot before or after the SFI indicating the Unknown resource.

### <<Case that DL Assignment/UL Grant is Detected in Slot before a slot in which SFI is detected>>

FIGS. 5A and 5B are diagrams to show examples of override control for an Unknown resource according to the second aspect. In FIGS. 5A and 5B, SFI indicating an Unknown resource is detected in a slot after a slot in which the DL assignment/UL grant is detected. Detailed operations of the radio base station and the user terminal in FIGS. 5A and 5B are the same as those in FIGS. 3A and 3B, respectively.

### <<Case that DL Assignment/UL Grant is Detected in Slot before a slot in which SFI is detected>>

FIGS. 6A and 6B are diagrams to show other examples of the override control for an Unknown resource according to the second aspect. In FIGS. 6A and 6B, a DL assignment/UL grant for scheduling a time/frequency resource including an Unknown resource in the PDSCH/PUSCH is detected in a slot after a slot in which the SFI indicating the Unknown resource is detected.

In FIG. 6A, similarly to in FIG. 4A, the user terminal monitors a CORESET in slot #0 to detect a DL assignment in slot #0 for scheduling the PDSCH, and DCI including SFI indicating an Unknown resource reserved in slot #1. The user terminal also monitors a CORESET in slot #1 to detect a DL assignment in slot #1 for scheduling the PDSCH.

In FIG. 6A, symbols #1 to #13 including the Unknown resource indicated by the SFI detected in previous slot #0 are scheduled in the PDSCH, by way of the DL assignment detected in later slot #1. In this case, different from in FIG. 4A, the user terminal does not perform the PDSCH reception based on the DL assignment detected in later slot #1 in the Unknown resource.

In FIG. 6B, similarly to in FIG. 4B, the user terminal monitors a CORESET in slot #0 to detect a UL grant in slot #0 for scheduling the PUSCH, and DCI including SFI indicating an Unknown resource reserved in slot #1. The user terminal also monitors a CORESET in slot #1 to detect a UL grant in slot #1 for scheduling the PUSCH.

In FIG. 6B, symbols #2 to #13 including the Unknown resource indicated by the SFI detected in previous slot #0 are scheduled in the PUSCH, by way of the UL grant detected in later slot #1. In this case, different from in FIG. 4B, the user terminal does not perform the PUSCH transmission based on the UL grant detected in later slot #1 in the Unknown resource.

Note that in FIGS. 6A and 6B, before the PDSCH/PUSCH are scheduled in slot #0, the Unknown resource is indicated in slot #1 by the SFI. In this manner, in a case that the indication of the Unknown resource by the SFI is before a certain timing (for example, a PDSCH/PUSCH scheduling timing), the Unknown resource can be taken into account on the transmission side (the radio base station in the DL, and the user terminal in the UL). For this reason, the DL data and/or UL data may be coded and/or mapped through the rate matching described above on the transmission side (the radio base station in the DL, and the user terminal in the UL) in consideration of the Unknown resource.

In FIGS. 6A and 6B, a feedback timing of transmission confirmation information (HARQ-ACK) for PDSCH/PUSCH may be determined regardless of whether or not the time/frequency resource scheduled in the PDSCH/PUSCH includes an Unknown resource.

As described above, in the override control for the Unknown resource, even if scheduling for a time/frequency resource including an Unknown resource is performed after indicating the Unknown resource by the SFI, the user terminal does not perform the PDSCH reception and/or the PUSCH transmission in the Unknown resource. For this reason, the Unknown resource can be more reliably reserved.

According to the second aspect, even in the case that SFI indicating an Unknown resource (DCI including the SFI) and a DL assignment/UL grant are detected in slots different from each other, the user terminal can adequately control the PDSCH reception and/or the PUSCH transmission.

### (Other Aspects)

The override control according to the second aspect may be controlled through higher layer signaling (for example, RRC signaling).

For example, in a case that the overriding operation is enabled through higher layer signaling, the override control based on the latest indication information described above may be adopted. On the other hand, in a case that the overriding operation is disabled through higher layer signaling, the override control for the Unknown resource described above may be adopted without adopting the override control based on the latest indication information described above.

### (Radio Communication System)

Hereinafter, a structure of a radio communication system according to the present embodiment will be described. In this radio communication system, a radio communication method according to each aspect described above is adopted. Note that the radio communication method according to each aspect may be adopted independently or may be adopted in combination.

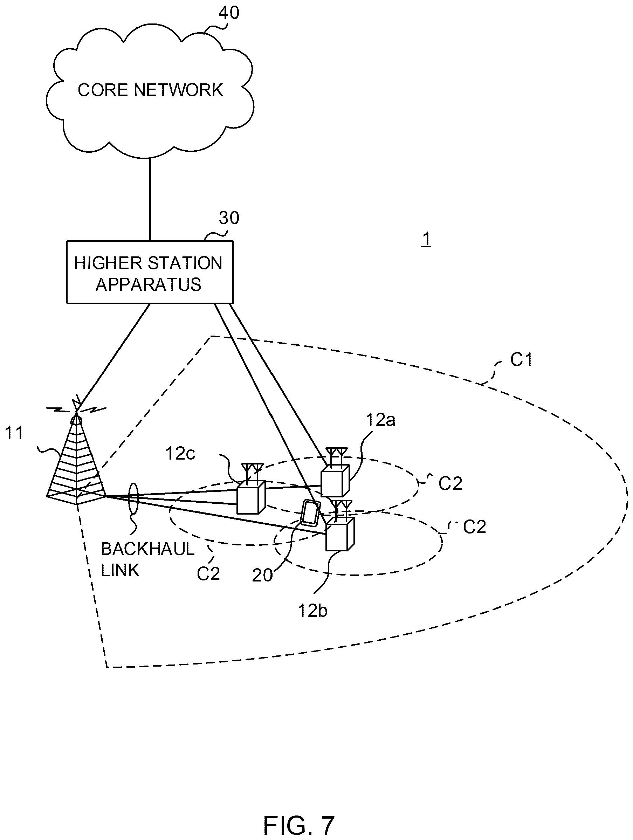

FIG. 7 is a diagram to show an example of a schematic structure of the radio communication system according to the present embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit. Note that the radio communication system 1 may be referred to as SUPER 3G, LTE-A (LTE-Advanced), IMT-Advanced, 4G, 5G, FRA (Future Radio Access), NR (New RAT), and the like.

The radio communication system 1 shown in FIG. 7 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. Numerologies different from each other between the cells may be adopted. Note that the numerology may be at least one of a subcarrier spacing, a symbol length, a cyclic prefix (CP) length, the number of symbols per a transmission time interval (TTI), and a time length of the TTI. The slot may be a time unit based on the numerology the user terminal adopts. The number of symbols per a slot may be defined depending on the subcarrier spacing.

The user terminals 20 can connect with both the radio base station 11 and the radio base stations 12. It is assumed that the user terminals 20 use the macro cell C1 and the small cells C2 that use different frequencies, at the same time by means of CA or DC. Also, the user terminals 20 may adopt CA or DC by using a plurality of cells (CCs) (for example, two or more CCs). The user terminal can also use a licensed band CC and an unlicensed band CC as the plurality of cells.

The user terminals 20 can perform communication by using time division duplex (TDD) or frequency division duplex (FDD) in each cell (carrier). A TDD cell and an FDD cell may be also referred to as a TDD carrier (second type of frame structure) and an FDD carrier (first type of frame structure), respectively, or the like.

In each cell (carrier), a slot having a relatively long time length (for example, 1 ms) (also referred to as a TTI, a normal TTI, a long TTI, a normal subframe, a long subframe, a subframe, or the like) and/or a slot having a relatively short time length (a mini-slot, a short TTI, a short subframe, or the like) may be adopted. In each cell, slots of two or more time lengths may be adopted.

Between the user terminals 20 and the radio base station 11, communication can be carried out by using a carrier of a relatively low frequency band (for example, 2 GHz) and a narrow bandwidth (referred to as, for example, an "existing carrier," a "Legacy carrier" and so on). Meanwhile, between the user terminals 20 and the radio base stations 12, a carrier of a relatively high frequency band (for example, 3.5 GHz, 5 GHz, 30 to 70 GHz, and so on) and a wide bandwidth may be used, or the same carrier as that used between the user terminals 20 and the radio base station 11 may be used. Note that the structure of the frequency band for use in each radio base station is by no means limited to these. One or more BWPs may be configured for the user terminal 20. The BWP includes at least a part of the carrier.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may include, for example, access gateway apparatus, a radio network controller (RNC), a mobility management entity (MME), and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

The user terminals 20 are terminals to support various communication schemes such as LTE, LTE-A, and so on, and may include not only mobile communication terminals but also stationary communication terminals. The user terminal 20 can also perform device-to-device (D2D) communication with another user terminal 20.

In the radio communication system 1, as radio access schemes, OFDMA (orthogonal frequency division multiple access) can be applied to the downlink (DL), and SC-FDMA (single-carrier frequency division multiple access) can be applied to the uplink (UL). The OFDMA is a multi-carrier communication scheme to perform communication by dividing a frequency band into a plurality of narrow frequency bands (subcarriers) and mapping data to each subcarrier. The SC-FDMA is a single-carrier communication scheme to mitigate interference between terminals by dividing the system bandwidth into bands including one or continuous resource blocks per terminal, and allowing a plurality of terminals to use mutually different bands. Note that the uplink and downlink radio access schemes are by no means limited to the combinations of these, and the OFDMA may be used for the UL. The SC-FDMA can be applied to a sidelink (SL) used for the device-to-device communication.

In the radio communication system 1, a DL data channel (also referred to as PDSCH (Physical Downlink Shared Channel, DL shared channel, or the like) shared by the user terminals 20, a broadcast channel (PBCH (Physical Broadcast Channel)), L1/L2 control channels, and so on are used as the DL channels. DL data (at least one of user data, higher layer control information, SIBs (System Information Blocks), and so on) is communicated on the PDSCH. MIBs (Master Information Blocks) are communicated on the

### PBCH.

The L1/L2 control channels include a DL control channel (PDCCH (Physical Downlink Control Channel) and/or EPDCCH (Enhanced Physical Downlink Control Channel)), a PCFICH (Physical Control Format Indicator Channel), a PHICH (Physical Hybrid-ARQ Indicator Channel) and so on. Downlink control information (DCI), including PDSCH and PUSCH scheduling information, and so on are communicated on the PDCCH. The number of OFDM symbols to use for the PDCCH is communicated on the PCFICH. The EPDCCH is frequency-division-multiplexed with the PDSCH and used to communicate the DCI and so on, like the PDCCH. PUSCH transmission confirmation information (also referred to as A/N, HARQ-ACK, HARQ-ACK bit, A/N codebook or the like) can be communicated on the PHICH.

In the radio communication system 1, a UL data channel (also referred to as PUSCH (Physical Uplink Shared Channel), UL shared channel, or the like) shared by the user terminals 20, a UL control channel (PUCCH (Physical Uplink Control Channel)), a random access channel (PRACH (Physical Random Access Channel)), and so on are used as the UL channels. The UL data (use data and/or higher layer control information) is communicated on the PUSCH. Uplink control information (UCI), including at least one of PDSCH transmission confirmation information (A/N, HARQ-ACK), channel state information (CSI), and the like, is communicated on the PUSCH or PUCCH. Random access preambles for establishing connections with cells are communicated on the PRACH.

### <Radio Base Station>

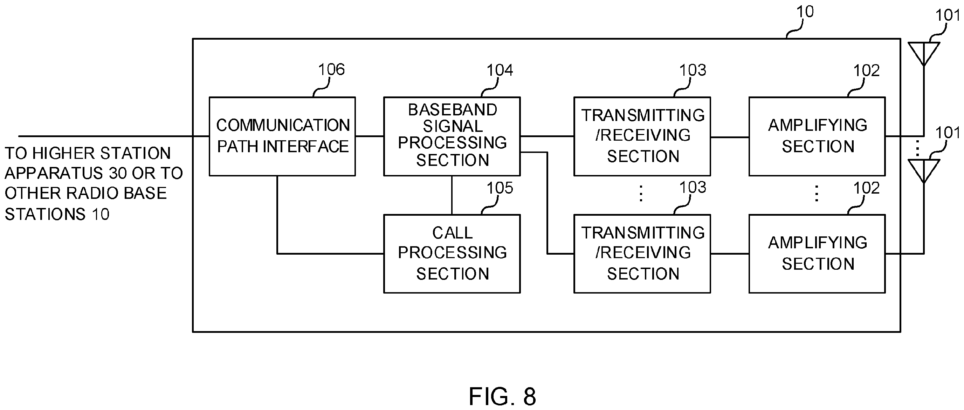

FIG. 8 is a diagram to show an example of an overall structure of the radio base station according to the present embodiment. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103. The radio base station 10 may configure a "receiving apparatus" in the UL and a "transmitting apparatus" in the DL.

User data to be transmitted from the radio base station 10 to the user terminal 20 in the downlink is input from the higher station apparatus 30 to the baseband signal processing section 104, via the transmission line interface 106.

In the baseband signal processing section 104, the user data is subjected to transmission processes, such as at least one of a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process (Hybrid Automatic Repeat reQuest)), scheduling, transport format selection, channel coding, rate-matching, scrambling, an inverse fast Fourier transform (IFFT) process, and a precoding process, and the result is forwarded to each transmitting/receiving section 103. The downlink control signals are also subjected to transmitting processes such as channel coding and/or an inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101.

The transmitting/receiving sections 103 can include transmitters/receivers, transmitting/receiving circuits or transmitting/receiving apparatus that can be described based on general understanding of the technical field to which the present invention pertains. Note that each transmitting/receiving section 103 may be structured as a transmitting/receiving section in one entity, or may be constituted with a transmitting section and a receiving section.

Meanwhile, as for UL signals, radio frequency signals that are received by the transmitting/receiving antennas 101 are amplified in the amplifying sections 102. The transmitting/receiving sections 103 receive the UL signals amplified in the amplifying sections 102. The transmitting/receiving sections 103 convert the received signals into the baseband signal through frequency conversion and outputs to the baseband signal processing section 104.

In the baseband signal processing section 104, the UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs at least one of call processing such as setting up, releasing and so on for communication channels, management of the state of the radio base station 10, and management of the radio resources.

The transmission line interface 106 transmits and/or receives signals to and/or from the higher station apparatus 30 via a certain interface. The transmission line interface 106 may transmit and/or receive signals (backhaul signaling) with neighboring radio base stations 10 via an inter-base station interface (for example, an optical fiber in compliance with the CPRI (Common Public Radio Interface) and an X2 interface).

The transmitting/receiving sections 103 transmit DL signals (for example, at least one kind of DL control signals (also referred to as DL control channel, DCI or the like), the DL data signals (also referred to DL data channel, DL data, the like), and the reference signals). The transmitting/receiving sections 103 receive UL signals (for example, at least one kind of UL control signals (also referred to as UL control channel, UCI or the like), the UL data signals (also referred to UL data channel, UL data, the like), and the reference signals).

Furthermore, the transmitting/receiving sections 103 transmit the slot format related information (SFI). The SFI may be included in the DCI common to one or more user terminals 20, or in another control information. The transmitting/receiving sections 103 may transmit the DCI (DL assignment and/or UL grant) including the scheduling information of the data channel (DL data channel and/or UL data channel) for the user terminal 20. Furthermore, the transmitting/receiving sections 103 may transmit the higher layer control information.

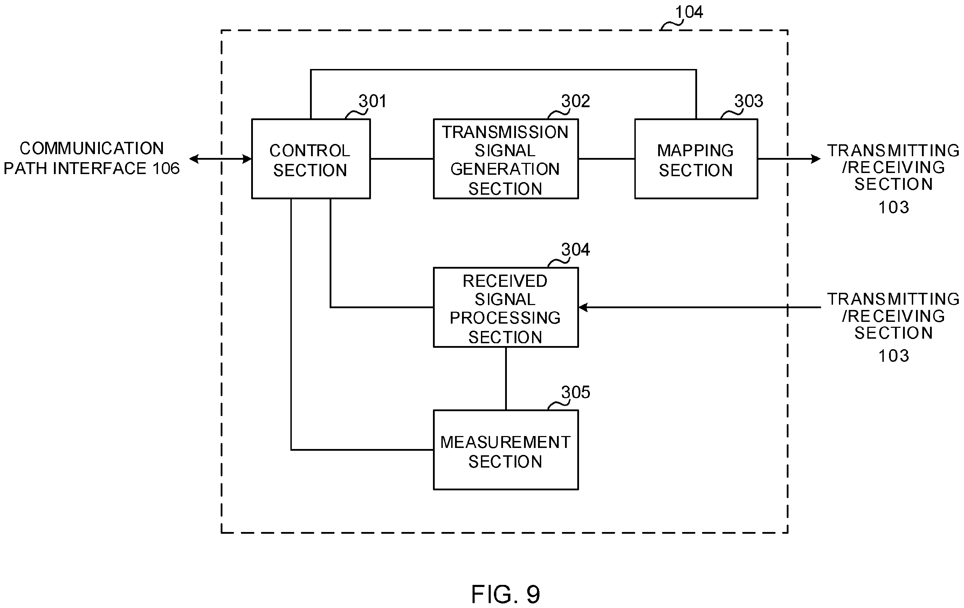

FIG. 9 is a diagram to show an example of a functional structure of the radio base station according to the present embodiment. Note that, FIG. 9 primarily shows functional blocks that pertain to characteristic parts of the present embodiment, and it is assumed that the radio base station 10 may also include other functional blocks that are necessary for radio communication as well. As shown in FIG. 9, the baseband signal processing section 104 is provided with a control section 301, a transmission signal generation section 302, a mapping section 303, a received signal processing section 304, and a measurement section 305.

The control section 301 controls the whole of the radio base station 10. The control section 301 controls, for example, at least one of DL signal generation in the transmission signal generation section 302, DL signal mapping in the mapping section 303, a UL signal receiving process in the received signal processing section 304 (for example, demodulation or the like), and measurement in the measurement section 305.

The control section 301 may control a transmission direction for each symbol in the time resource (for example, at least one of one or more slots, one or more mini-slots, and one or more symbols) that is a scheduling unit of the data channel (DL data channel and/or UL data channel). Specifically, the control section 301 may control generation and/or transmission of the SFI indicating the DL symbol and/or UL symbol in the slot.

The control section 301 controls also reservation (configuration) of the time and/or frequency resource (Unknown resource) which is not assumed to be received and/or transmitted in the user terminal 20. Specifically, the control section 301 may control generation and/or transmission of the SFI indicating a certain symbol and certain frequency resource reserved as an Unknown resource.

The control section 301 may schedule the data channel (DL data channel and/or UL data channel), based on the Unknown resource (the first aspect, FIGS. 1A and 1B). Specifically, the control section 301 may schedule the data channel in a time/frequency resource not overlapping the Unknown resource.

Alternatively, the control section 301 may schedule the data channel (DL data channel and/or UL data channel) regardless of the Unknown resource (the first and second aspects, FIGS. 2A and 2B, FIGS. 3A to 6B).

The control section 301 may control transmission and/or reception of the data channel (DL data channel and/or UL data channel). Specifically, the control section 301 may determine a size of the DL data and/or UL data (transport block (TB)) (a size of TB (TBS (Transport Block Size))) (in a case of puncturing) regardless of the Unknown resource.

In the case of puncturing, the control section 301 may control a DL data transmitting process (for example, at least one of coding, modulation, and mapping) regardless of the Unknown resource. The control section 301 may control a UL data receiving process (for example, at least one of reception, demodulation, and decoding) in consideration of the Unknown resource.

Alternatively, the control section 301 may determine a size of the DL data and/or UL data (TB) (TBS) (in a case of rate matching) in consideration of the Unknown resource. In the case of rate matching, the control section 301 may control the DL data transmitting process (for example, at least one of coding, modulation, and mapping) in consideration of the Unknown resource. The control section 301 may control the UL data receiving process (for example, at least one of reception, demodulation, and decoding) regardless of the Unknown resource.

The control section 301 can be constituted with a controller, a control circuit or control apparatus that can be described based on general understanding of the technical field to which the present invention pertains.

The transmission signal generation section 302 may generate the DL signals (including at least one kind of the DL data (channel), the DCI, the DL reference signals, and the control information through higher layer signaling), based on the indication from the control section 301 to output the generated DL signals to the mapping section 303.

The transmission signal generation section 302 can be a signal generator, a signal generation circuit or signal generation apparatus that can be described based on general understanding of the technical field to which the present invention pertains.

The mapping section 303 maps the DL signals generated in the transmission signal generation section 302 to certain radio resources, based on the indication from the control section 301, and outputs the result to the transmitting/receiving sections 103. For example, the mapping section 303 uses an allocation pattern determined by the control section 301 to map the reference signals to a certain radio resource.

The mapping section 303 can be a mapper, a mapping circuit or mapping apparatus that can be described based on general understanding of the technical field to which the present invention pertains.

The received signal processing section 304 performs a receiving process (for example, at least one of demapping, demodulation, and decoding, and so on) of the UL signals transmitted from the user terminal 20. Specifically, the received signal processing section 304 may output the received signals and/or the signals after the receiving process to the measurement section 305.

The received signal processing section 304 can be constituted with a signal processor, a signal processing circuit or signal processing apparatus that can be described based on general understanding of the technical field to which the present invention pertains. The received signal processing section 304 can constitute the receiving section according to the present invention.

The measurement section 305 may measure UL channel quality, based on, for example, received power of the reference signal (for example, RSRP (Reference Signal Received Power)) and/or received quality of the reference signal (for example, RSRQ (Reference Signal Received Quality)). The measurement results may be output to the control section 301.

### <User Terminal>

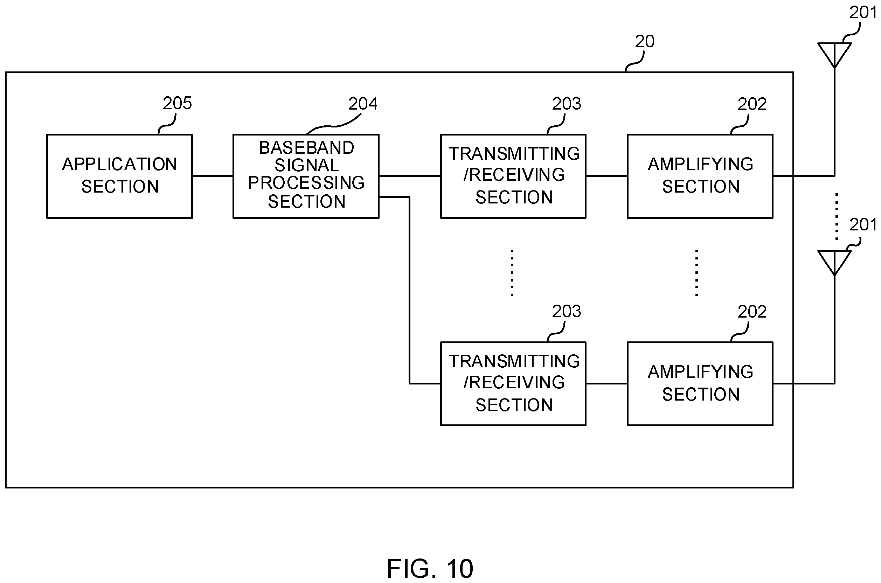

FIG. 10 is a diagram to show an example of an overall structure of the user terminal according to the present embodiment. The user terminal 20 includes a plurality of transmitting/receiving antennas 201 for MIMO communication, amplifying sections 202, transmitting/receiving sections 203, a baseband signal processing section 204, and an application section 205. The user terminal 20 may configure a "transmitting apparatus" in the UL and a "receiving apparatus" in the DL.

Radio frequency signals that are received via the plurality of transmitting/receiving antennas 201 are amplified in the amplifying sections 202. The transmitting/receiving sections 203 receive the DL signals amplified in the amplifying sections 202. The transmitting/receiving sections 203 convert the received signals into baseband signals through frequency conversion, and output the baseband signals to the baseband signal processing section 204.

The baseband signal processing section 204 performs, on each input baseband signal, at least one of an FFT process, error correction decoding, a retransmission control receiving process, and so on. The DL data is forwarded to the application section 205. The application section 205 performs processes related to higher layers above the physical layer and the MAC layer, and so on.

Meanwhile, the UL data is input from the application section 205 to the baseband signal processing section 204. The baseband signal processing section 204 performs at least one of a retransmission control process (for example, an HARQ process), channel coding, rate matching, puncturing, a discrete Fourier transform (DFT) process, an IFFT process, and so on, and the result is forwarded to the transmitting/receiving sections 203. On the UCI (for example, at least one of A/N for the DL signal, channel state information (CSI), and scheduling request (SR)), at least one of channel coding, rate matching, puncturing, the DFT process, the IFFT process, and the like is performed, and the result is forwarded to each transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 receive the DL signals (for example, at least one kind of DL control signals (also referred to as DL control channel, DCI or the like), the DL data signals (also referred to DL data channel, DL data, the like), and the reference signals). The transmitting/receiving sections 203 transmit the UL signals (for example, at least one kind of UL control signals (also referred to as UL control channel, UCI or the like), the UL data signals (also referred to UL data channel, UL data, the like), and the reference signals).

The transmitting/receiving sections 203 receive the slot format related information (SFI). The SFI may be included in the DCI common to one or more user terminals 20, or in another control information. The transmitting/receiving sections 203 may receive the DCI (DL assignment and/or UL grant) including the scheduling information of the data channel (DL data channel and/or UL data channel) for the user terminal 20. Furthermore, the transmitting/receiving sections 203 may receive the higher layer control information.

The transmitting/receiving sections 203 can be transmitters/receivers, transmitting/receiving circuits or transmitting/receiving apparatus that can be described based on general understanding of the technical field to which the present invention pertains. Each transmitting/receiving section 203 may be structured as a transmitting/receiving section in one entity, or may be constituted with a transmitting section and a receiving section.

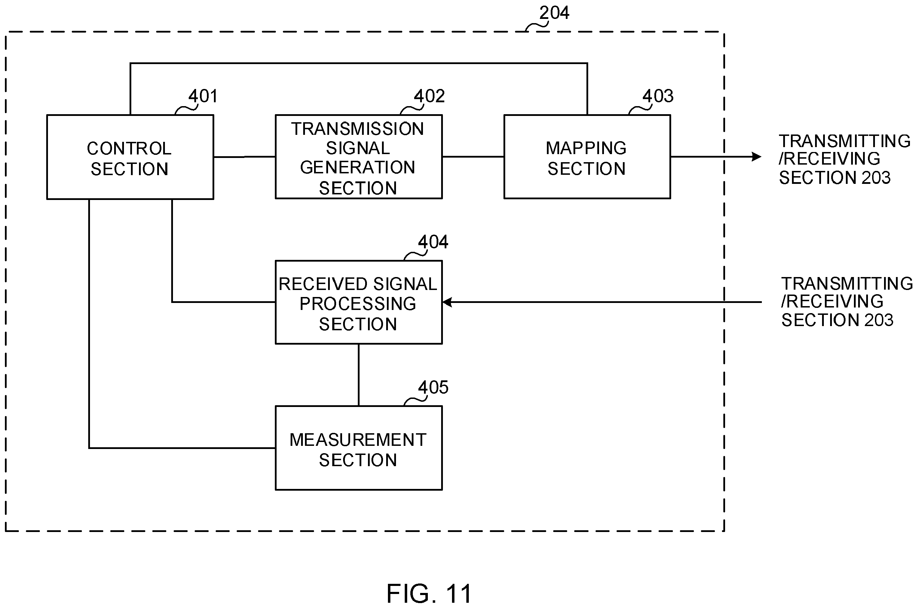

FIG. 11 is a diagram to show an example of a functional structure of the user terminal according to the present embodiment. Note that, FIG. 11 primarily shows functional blocks that pertain to characteristic parts of the present embodiment, and it is assumed that the user terminal 20 may also include other functional blocks that are necessary for radio communication as well. As shown in FIG. 11, the baseband signal processing section 204 included in the user terminal 20 is provided with a control section 401, a transmission signal generation section 402, a mapping section 403, a received signal processing section 404, and a measurement section 405.

The control section 401 controls the whole of the user terminal 20. The control section 401 controls, for example, at least one of UL signal generation in the transmission signal generation section 402, UL signal mapping in the mapping section 403, a DL signal receiving process in the received signal processing section 404, and measurement in the measurement section 405.

Specifically, the control section 401 may control monitoring (blind decoding) of the DL control channel, and detection of the DCI (including group-common DCI and/or UE-specific DCI) for the user terminal 20. For example, the control section 401 may monitor one or more CORESETs configured for the user terminal 20 (or the search space in each CORESET).

The control section 401 may control a transmission direction for each symbol in the time resource (for example, at least one of one or more slots, one or more mini-slots, and one or more symbols) that is a scheduling unit of the data channel (DL data channel and/or UL data channel). Specifically, the control section 401 may determine the DL symbol and/or the UL symbol in the time resource based on the SFI.

The control section 401 may not assume reception and/or transmission in the time/frequency resource determined as an Unknown resource based on the SFI.

The control section 401 may control reception and/or transmission of the data channel (DL data channel and/or UL data channel), based on the DCI. Specifically, in a case that at least a part of a time and/frequency resource in which the data channel is scheduled by way of the DCI (DL assignment and/or UL grant) collides with the Unknown resource indicated by the SFI, the control section 401 may control reception and/or transmission of the data channel in the time and/or frequency resource.

For example, in a case that the SFI and the DCI are detected in the same slot and/or in a case that the DCI is detected in a slot before a slot in which the SFI is detected, the control section 401 may control the transmitting/receiving section 203 such that the transmitting/receiving section 203 does not perform reception and/or reception of the data channel based on the DCI in the time and/or frequency resource colliding with the Unknown resource (the first aspect, FIGS. 2A and 2B, the second aspect, FIGS. 3A and 3B, FIGS. 5A and 5B).

In a case that the DCI is detected in a slot after a slot in which the SFI is detected, the control section 401 may control the transmitting/receiving section 203 such that the transmitting/receiving section 203 performs reception and/or transmission of the data channel based on the DCI in the time and/or frequency resource colliding with the Unknown resource (the second aspect, FIGS. 4A and 4B).

In the case that the DCI is detected in a slot after a slot in which the SFI is detected, the control section 401 may control the transmitting/receiving section 203 such that the transmitting/receiving section 203 does not perform reception and/or transmission of the data channel based on the DCI in the time and/or frequency resource colliding with the Unknown resource (the second aspect, FIGS. 6A and 6B).

The control section 401 may control the transmitting/receiving section 203 such that the transmitting/receiving section 203 performs reception and/or transmission of the data channel based on the DCI in a time and/or frequency resource not colliding with the Unknown resource among the time and/frequency resources scheduled by way of the DCI (the first and second aspects, FIGS. 1A to 6B).

The control section 401 may determine a size of the DL data and/or UL data (transport block (TB)) (a size of TB (TBS)) (in a case of puncturing) regardless of the Unknown resource.

In the case of puncturing, the control section 401 may control a UL data transmitting process (for example, at least one of coding, modulation, and mapping) regardless of the Unknown resource. The control section 401 may also control a DL data receiving process (for example, at least one of reception, demodulation, and decoding) in consideration of the Unknown resource.

Alternatively, the control section 401 may determine a size of the DL data and/or UL data (TB) (TBS) (in a case of rate matching) in consideration of the Unknown resource. In the case of rate matching, the control section 401 may control a UL data transmitting process (for example, at least one of coding, modulation, and mapping) in consideration of the Unknown resource. The control section 401 may control the DL data receiving process (for example, at least one of reception, demodulation, and decoding) regardless of the Unknown resource.

The control section 401 can be constituted with a controller, a control circuit or control apparatus that can be described based on general understanding of the technical field to which the present invention pertains.

The transmission signal generation section 402 generates retransmission control information (for example, coding, rate matching, puncturing, modulating, and so on) of the UL signal and the DL signal, based on the indication from the control section 401 to output the generated information to the mapping section 403. The transmission signal generation section 402 can be a signal generator, a signal generation circuit or signal generation apparatus that can be described based on general understanding of the technical field to which the present invention pertains.

The mapping section 403 maps the retransmission control information of the UL signals and DL signals generated in the transmission signal generation section 402 to radio resources, based on the indication from the control section 401, and outputs the result to the transmitting/receiving sections 203. For example, the mapping section 403 uses an allocation pattern determined by the control section 401 to map the reference signals to a certain radio resource.

The mapping section 403 can be a mapper, a mapping circuit or mapping apparatus that can be described based on general understanding of the technical field to which the present invention pertains.

The received signal processing section 404 performs a receiving process (for example, at least one of demapping, demodulation, and decoding, and so on) of the DL signals. For example, the received signal processing section 404 may use the reference signals in the allocation pattern determined by the control section 401 to demodulate the DL data channel.

The received signal processing section 404 may output the received signals and/or the signals after the receiving process to the control section 401 and/or the measurement section 405. The received signal processing section 404 outputs, for example, the higher layer control information through higher layer signaling, the L1/L2 control information (for example, UL grant and/or DL assignment) and the like to the control section 401.

The received signal processing section 404 can be constituted with a signal processor, a signal processing circuit or signal processing apparatus that can be described based on general understanding of the technical field to which the present invention pertains. The received signal processing section 404 can constitute the receiving section according to the present invention.

The measurement section 405 measures a channel state, based on the reference signals from the radio base station 10 (for example, CSI-RS), and outputs the measurement result to the control section 401. Note that the channel state measurement may be performed for each CC.

The measurement section 405 can be constituted with a signal processor, a signal processing circuit or signal processing apparatus, and a measurer, a measurement circuit or measurement apparatus that can be described based on general understanding of the technical field to which the present invention pertains.

### <Hardware Structure>

Note that the block diagrams that have been used to describe the above embodiments show blocks in functional units. These functional blocks (components) may be implemented in arbitrary combinations of hardware and/or software. Also, means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

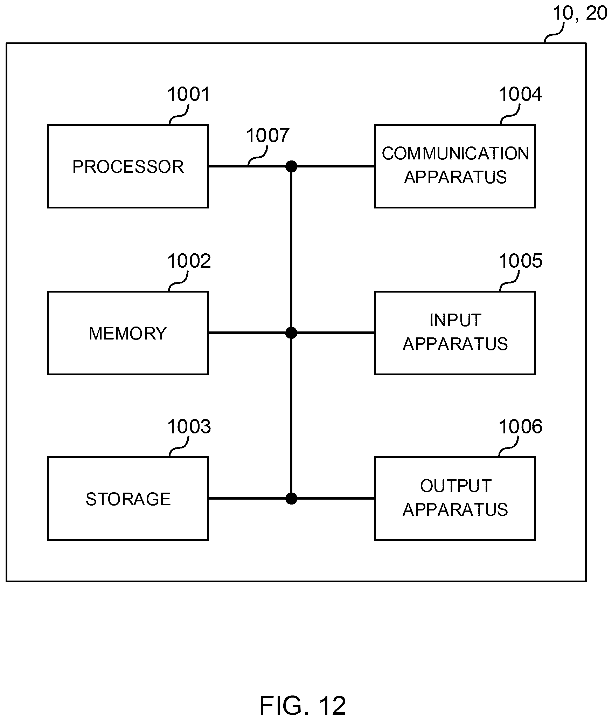

For example, a radio base station, a user terminal, and so on according to the present embodiment may function as a computer that executes the processes of the radio communication method of the present invention. FIG. 12 is a diagram to show an example of a hardware structure of the radio base station and the user terminal according to the present embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004, and control at least one of read and write of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations described in the above embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may include, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present invention.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via a wired and/or wireless network, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus shown in FIG. 12 are connected via a bus 1007 for communicating information. The bus 1007 may be formed with a single bus, or may be formed with buses that vary between the apparatuses.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in this specification and/or the terminology that is needed to understand this specification may be replaced by other terms that convey the same or similar meanings. For example, "channels" and/or "symbols" may be "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain.

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms.

Here, a TTI refers to the minimum time unit of scheduling in radio communication, for example. For example, in LTE systems, a radio base station schedules the allocation of radio resources (such as a frequency bandwidth and/or transmission power that are available for each user terminal) for the user terminal in TTI units. Note that the definition of TTIs is not limited to this. TTIs may be transmission time units for channel-encoded data packets (transport blocks), or may be the unit of processing of scheduling and/or link adaptation, and so on. Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," and so on.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that the RB may be referred to as a physical resource block (PRB (Physical RB)), a PRB pair, an RB pair, and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be indicated by certain indices. Mathematical expressions using these parameters and so on may be different from those explicitly disclosed in this specification.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names allocated to these various channels and information elements are in no respect limiting.

The information, signals, and so on described herein may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting the certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" used in this specification can be used interchangeably.

In this specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In this specification, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, "uplink" and/or "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Specific actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up, (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. Two elements used herein may be considered "connected" or "coupled" to each other by using one or more electrical wires, cables and/or printed electrical connections, and, as some non-limiting and non-inclusive examples, by using electromagnetic energy such as electromagnetic energy having wavelengths in radio frequency regions, microwave regions, and (both visible and invisible) optical regions, or the like.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described in this specification. The present invention can be implemented with various corrections and in various modifications, without departing from the spirit and scope of the present invention defined by the recitations of claims. Consequently, the description in this specification is provided only for the purpose of explaining examples, and should by no means be construed to limit the present invention in any way.

## Claims

1. A user terminal comprising:
a transmitting and/or receiving section that receives first downlink control information (DCI) indicating a first time and/or frequency resource in which transmission and/or reception the user terminal should not assume; and
a control section that controls, in a case that at least a part of a second time and/frequency resource in which data channel is scheduled according to second downlink control information (DCI) collides with the first time and/or frequency resource, reception and/or transmission of the data channel in the second time and/or frequency resource.

2. The user terminal according to claim 1, wherein
in a case that the first DCI and the second DCI are detected in the same slot, and/or, in a case that the second DCI is detected in a slot before a slot in which the first DCI is detected, the transmitting and/or receiving section does not perform reception and/or reception of the data channel, based on the second DCI in a time and/or frequency resource that collides with the first time and/or frequency resource in the second time and/or frequency resource.

3. The user terminal according to claim 1 or 2, wherein
in a case that the second DCI is detected in a slot after a slot in which the first DCI is detected, the transmitting and/or receiving section performs reception of the DL data channel and/or transmission of the UL data channel based on the second DCI in a time and/or frequency resource that collides with the first time and/or frequency resource in the second time and/or frequency resource.

4. The user terminal according to claim 1 or 2, wherein
in a case that the second DCI is detected in a slot after a slot in which the first DCI is detected, the transmitting and/or receiving section does not perform reception and/or transmission of the data channel based on the second DCI in a time and/or frequency resource that collides with the first time and/or frequency resource in the second time and/or frequency resource.

5. The user terminal according to any one of claims 1 to 4, wherein
the transmitting and/or receiving section performs reception and/or transmission of the data channel based on the second DCI in a time and/or frequency resource that does not collide with the first time and/or frequency resource in the second time and/or frequency resource.

6. A radio communication method comprising, in a user terminal:
receiving first downlink control information (DCI) indicating a first time and/or frequency resource in which transmission and/or reception the user terminal should not assume; and
controlling, in a case that at least a part of a second time and/frequency resource in which data channel is scheduled according to second downlink control information (DCI) collides with the first time and/or frequency resource, reception and/or transmission of the data channel in the second time and/or frequency resource.
